Europäisches Patentamt

European Patent Office

Office européen des brevets

(11) Publication number: **0 511 437 A1**

## EUROPEAN PATENT APPLICATION

(21) Application number: **91303908.7**

(22) Date of filing: **30.04.91**

(51) Int. Cl.5: **G06F 9/44**

(43) Date of publication of application:
**04.11.92 Bulletin 92/45**

(84) Designated Contracting States:
**DE FR GB**

(71) Applicant: **Hewlett-Packard Limited**
**Cain Road**
**Bracknell, Berkshire RG12 1HN(GB)**

(72) Inventor: **Cox, Alasdair**
**1 The Mead**
**Filton, Bristol, BS12 7AW(GB)**

(74) Representative: **Smith, Denise Mary et al**
**Hewlett-Packard Limited, Building 2,**
**Intellectual Property Section, Filton Road**
**Stoke Gifford, Bristol BS12 6OZ(GB)**

(54) **Computer system.**

(57) A computer system comprises a declarative language (eg Prolog) subsystem 20 from which a procedural language (foreign language, FL) subsystem 10 can obtain information. An interface 30 connects the two subsystems. A query in a query register 12 in the FL subsystem is passed a query register 35 in the interface to the query processor 21 in the Prolog subsystem. This query can include both Prolog terms and identifiers for them. The interface includes a descriptor list register 32 which contains, for each identifier in the query, a descriptor consisting of that identifier linked to the position of the argument in register 12, and a pointer to the associated Prolog term, which is kept in a Prolog terms register 23 in the Prolog subsystem. Intermediate terms in the processing of a sequence of queries remain in the Prolog subsystem; the only data flowing between the two subsystems is initial operands and final results. Such data is passed via a format converter 31 in the interface.

FIG 1

The present invention relates to computer systems, and more specifically to the servicing, by a system using a declarative format or language such as Prolog, of an enquiry from another system using a different language (typically a procedural language).

## General Background

Computers are used for a wide variety of purposes, and a wide variety of languages have been developed, most of which are intended primarily for a particular type of purpose. There are many systems or languages intended broadly for "general-purpose" data processing, such as Fortran, C, and Pascal. There are also systems or languages concerned primarily with storage of information; a body of stored information is generally referred to as a database, and a database system is designed to permit information to be efficiently stored and retrieved.

It is frequently desirable or necessary for a system using one language to be able to access information from a system using another language. Thus a management information program may need to access an accounting program which in turn may need to access a database, for example. There is therefore a general need to provide effective means whereby different systems (using different styles or languages) can access each other. A variety of techniques have been developed whereby a system using one language can access a system using another.

The languages mentioned so far are generally procedural languages; that is, a program in one of these languages defines more or less explicitly the procedures to be followed in attaining the required results. Recently, however, a different type or style of language, non-procedural or declarative, has been developed, a typical example being Prolog. These languages are intended primarily for knowledge organization and manipulation, expert systems, and artificial intelligence. In these languages, the information which the system operates on is expressed in the form of a set of statements, and enquiries to the system are expressed as queries having a similar form to the statements. The system is designed to automatically perform all the necessary processing to determine whether the conditions expressed by the queries can be satisfied, and if so, how.

The need for access between systems using different styles or languages applies equally to procedural and declarative language systems. In particular, there is a need for procedural language systems to be able to access information from declarative language systems. Techniques have therefore been developed for this purpose, analogous to the techniques used for enabling a system using one procedural language to access information from a system using a different procedural language.

We have realized, however, that these known techniques for enabling procedural language systems to be able to access information from declarative language systems are unduly restrictive. Some desirable types of access can be performed only inefficiently, and others cannot be performed at all. The general object of the present invention is therefore to provide an improved technique whereby procedural language systems can access information from declarative language systems.

We will assume in our specific example that the system using the declarative language is a Prolog-style system (which we will call simply a Prolog system) and refer to the other system, using a procedural language, as the foreign language (FL) system. The general purpose of the present system is to provide a foreign language interface; that is, an interface between the Prolog system and the foreign language system whereby the foreign language system can call the Prolog system. The call involves the foreign language system passing information to the Prolog system defining the information required, and the Prolog system calculating and returning that information.

The information returned may be an indication of success or failure (HIT or MISS), whether a HIT is single or multiple, and values of variables.

The term "system" has been used here so far in a general sense; for example, the two systems may be subsystems running on a common host, or two separate systems running on two separate computers linked by a communication system. From now on, the term will be used primarily for the present system as a whole. The Prolog and FL systems and the FL interface will each be referred to as subsystems, these three subsystems together forming the present system.

## Prolog

The present specification assumes a basic knowledge of logic programming such as that possessed by any skilled worker in the field. In particular, some knowledge of the logic programming language Prolog is assumed. As an aid in understanding the invention, however, an exceedingly brief summary of Prolog is as follows. This summary is of course far from precise; for accuracy, reference must be had to a standard text on Prolog.

(For a basic text, refer to "Programming in Prolog", W F Clocksin and C S Mellish, Springer-Verlag, 1984). Examples of uses of and extensions to Prolog are given by, for example, D A Bowen and R A Kowalski, "Amalgamating Language and Metalanguage in Logic Programming", pages 153-182 of Logic Programming, edited by K L Clark and S-A Ternlund, Academic Press, New York, 1982 and also K A Bowen and T Weinberg, "A Meta-level Extension of Prolog", pages 48-53 of 1985 Symposium on Logic Programming, Boston, IEEE.)

Prolog is a declarative language designed primarily for symbolic, non-numeric computation, and a Prolog program consists of a set of fact and rule statements. There is almost nothing corresponding to the program structure of, say, Fortran.

For present purposes, the ultimate elements of Prolog are constants. Variables also, of course, exist in Prolog, though they are "ultimately" (in the sense just used) instantiated as ("replaced by") constants. A constant is normally written with an initial lower-case letter (eg **john**), a variable with an initial upper-case letter (eg **X** or **Father**).

A typical simple Prolog fact statement has the form **parent (john, susan)**, which can be taken as meaning that **john** is the parent of **susan**. A query or goal has the same form as a fact statement preceded by a query symbol **?**. Thus **?parent-(john,Child)** is a query. A Prolog system will recognize a query, identify the variables in it (in this case **Child**, identified as a variable by its initial upper-case letter), and try to find a "solution" to the implied goal of finding a constant which makes the query statement true. In this case, the variable **Child** is instantiated to the constant **susan**.

A fact statement can have any number of arguments, and any of these can be variables; if the fact statement is a query, the system tries to find constants for all these variables. (A goal or query can consist of a combination of statements, so that for example a variable has to satisfy two or more query statements together.) As a matter of terminology, a variable is said to be bound when a goal containing it is satisfied and the variable is instantiated; until that occurs, the variable is said to be unbound.

More general relationships are expressed as rules, which are composed of statements having the same general form as fact statements. An example of a relationship is

**grandfather(X,Y) :-**
    **father(X,Z),**
    **father(Z,Y;**
    **father(X,Z),**
    **mother(Z,Y).**

(Here the comma indicates logical AND, so that for example **father(X,Z)** and **father(Z,Y)** must both be true, while the semicolon indicates logical OR, so that grandfatherhood can be paternal or maternal.) The system is able to utilize the rules to draw logical conclusions in trying to satisfy a goal or query; in other words, it finds that the left-hand portion of a rule might satisfy a query if it is able to solve the right-hand side as one or more sub-queries.

A fundamental feature of Prolog is that rules can be recursive. A simple example is

**ancestor(X,Y):-**
    **parent(X,Y)**
**ancestor(X,Z) :-**
    **parent(X,Y)**
    **ancestor(Y,Z).**

The second rule defines the ancestorhood relationship recursively. A recursive relationship like this must always be accompanied by an alternative non-recursive rule for the same relationship; here, the first rule defines the required alternative ancestorhood relationship. (There are also further limitations which must be observed if the danger of infinite regress is to be avoided.)

Conventionally, spaces may be inserted into statements to make them easier to read, so that **parent(john,susan)** may be written as **parent (john, susan)**. Such spaces are normally disregarded by the Prolog system. If it is desired to use a term with a space - say "parent of" rather than just "parent" - then this is written as **parent of,** which is treated by the Prolog system as a unitary term.

A noted above, Prolog is primarily a declarative rather than a procedural language. The primary way to achieve something in Prolog is therefore by formulating a goal - a statement preceded by a query symbol. The system attempts to satisfy this goal, by looking for constants which can be substituted for the variables in the goal. In so doing, the system searches through the various statements, looking for ones which match the goal or some part of it. (This may involve setting up sub-goals.) So statements can often be regarded as declarative formulations of what, in procedural systems, would be subroutines. (The ancestorhood rules above are a simple example of this.) The setting up of a subgoal in a Prolog system is broadly similar to the calling of a subroutine in a procedural system.

Although Prolog is primarily symbolic, it is possible to include numeric functions in it. In fact, some basic functions like addition of integers are normally built into the system, and more complicated functions can be defined in terms of these basic functions.

In the description which follows, the conventions of Prolog will be used, though somewhat loosely and informally. Further, some aspects of the invention will be described procedurally rather than declaratively. It will be realized that on the one hand, the invention can be implemented largely by means of declarative statements supported by a conventional Prolog or Prolog-like system; on the other hand, the invention can be implemented procedurally if required.

## Query processing - general

The main object of the system is to enable the FL subsystem to put a query to the Prolog subsystem, with the Prolog subsystem answering the query and returning the answer to the FL subsystem for that subsystem to utilize. Considering first the Prolog subsystem, this must be provided with the query in conventional Prolog form. We will take for convenience a simple Prolog query, f-(abc,X). This query or goal is to discover a value for **X** which satisfies the binary function or relationship **f** when the other component of the function is **abc**. (More generally, of course, the Prolog query may contain several variables, both bound and unbound.)

Considering the conventional system in slightly more detail, the FL subsystem has to construct the query which is to be passed to the Prolog subsystem. The query may effectively be written directly by the operator or programmer, or it may be constructed by a suitable program routine in the FL subsystem. This query will have the appropriate terms in the appropriate arrangement.

To interrogate the Prolog subsystem with the query, it is passed to a conventional query interface in the Prolog subsystem, which duly attempts to satisfy the query. The answer which is so produced by the Prolog subsystem is passed back via the query interface to the FL subsystem. The answer can then be analysed and used by the FL subsystem.

In practice, there are of course subtleties involved in this. For example, it will be realized that when the query is constructed in the FL subsystem, the individual terms will be in the FL subsystem format, and have to be converted to Prolog format. The general syntax may also need some conversion to the Prolog subsystem format. The answer passed back from the Prolog subsystem to the FL subsystem will require a reverse conversion from Prolog syntax and format to the FL structure format. These conversions will normally be handled by the interface.

A query does not, of course, necessarily have one and only one answer. The Prolog subsystem will therefore be capable of returning a failure message, or of producing several successive answers to a query. The failure message can be passed to the FL subsystem (possibly after a succession of answers, as an indication that all answers have been found). The FL subsystem will also be able to pass a Resatisfy instruction to the Prolog subsystem, to ask for the next answer (if any) to the query previously sent. The query interface of the Prolog subsystem will handle these functions in the conventional manner.

It will be seen that in this conventional arrangement, each query is treated in an essentially self-contained manner. The query is constructed in the FL subsystem and passed to the Prolog subsystem, and the Prolog subsystem answers the query and passes the answer back to the FL subsystem. The coupling established between the two subsystems for the purposes of the query is transient; once the query has been dealt with, that coupling ceases to exist.

This arrangement is satisfactory for systems in which queries from the FL subsystem to the Prolog subsystem are few and simple. However, in systems in which the number of queries from the FL subsystem to the Prolog subsystem is large and/or in which these queries are complicated, this known arrangement involves a heavy load on the coupling or interface mechanism between the two subsystems.

The object of the present invention is to provide a system in which such queries are handled more efficiently.

## Principles of the present system

A system embodying the present invention will now be described, by way of example, with reference to the drawings, in which:

Fig. 1 is a general block diagram of the system; and

Fig. 2 is a more detailed block diagram of parts of the system, showing various information flows.

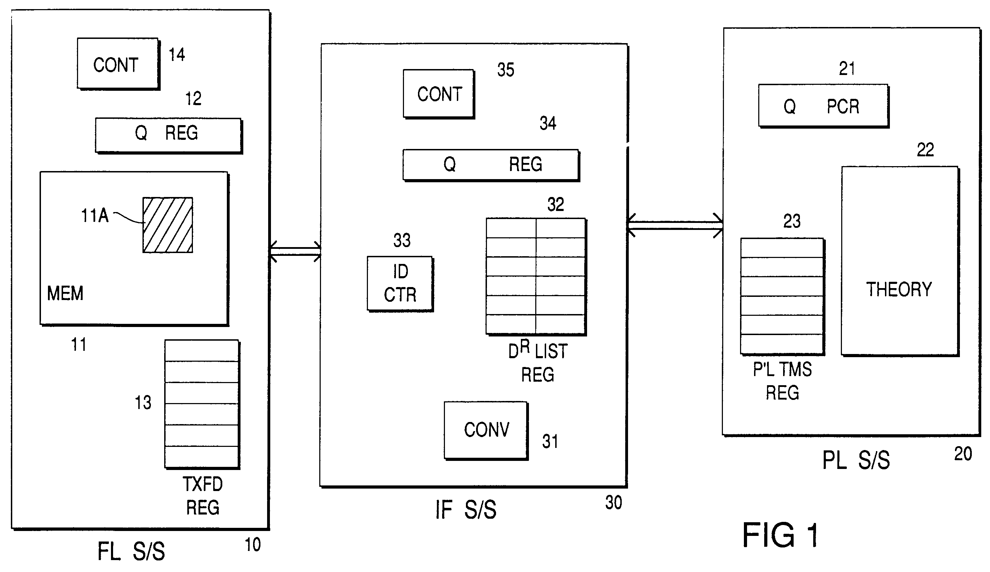

Fig. 1 is a block diagram of the present system, which consists of three subsystems, a FL subsystem 10 and a Prolog subsystem 20 coupled to each other by means of an interface subsystem 30.

The main units of the FL subsystem 10 comprise a memory 11 including a program segment 11A which contains the program which wants to obtain information from the Prolog subsystem, a query register 12, a transferand memory 13 (which may form part of the main memory 11), and a control unit 14 which controls the operation of the FL subsystem. The main units of the Prolog subsystem 20 comprise a query processor 21, a theory unit 22, and a Prolog terms memory 23; all queries to the subsystem are handled by and passed through the query processor 21, which attempts to satisfy them within the theory held in the theory unit 22. The main units of the interface 30 are a converter 31, a descriptor list memory 32, an identifier counter 33, a query register 34, and a control unit 35 which controls the operation of the interface. These units, and their operation, will be described more fully later.

In the present system, the interface includes descriptor means for associating descriptors with Prolog terms. The FL subsystem is therefore enabled to use descriptors, rather than Prolog terms themselves, in communicating with the Prolog subsystem.

The use of descriptors rather than Prolog terms themselves involves the operation of the interface in a certain amount of overhead. If the terms are large, then this overhead is justified, but if the terms are small, the overhead is relatively large. The present system therefore provides two ways of passing terms from the FL subsystem to the Prolog subsystem. One way is direct, and is broadly the same as in the prior art; the other way uses descriptors. The present system provides only one way of passing terms back from the Prolog subsystem to the FL subsystem, involving the use of descriptors. Although this involves an appreciable overhead if the terms are small, it enables the interface design to be simpler. A conventional Prolog subsystem does not have a readily usable and convenient way of passing terms to another subsystem, so in the prior art, either the Prolog subsystem has to be modified or the interface has to be specially designed to permit this (one of the subtleties mentioned above). This complication is avoided in the present system.

The first time a term is used by the FL subsystem, of course, there is no descriptor for it. The term itself therefore has to be sent from the FL subsystem to the Prolog subsystem. In addition, a descriptor may be generated for the term; whenever that term is used subsequently, the FL subsystem can then use its descriptor rather than the term itself, and the interface will replace the descriptor by the term itself in the query as it reaches the query processor of the Prolog subsystem. The passage of terms across the interface, and the accompanying need for format conversion, is thus reduced.

The FL subsystem may need to make a sequence of queries, using the results of the earlier queries in the later queries. With the known system, this involves passing the results of each query across from the Prolog subsystem to the FL subsystem, the FL subsystem processing these to construct the further queries, and the further queries being passed across to the Prolog subsystem. This may impose a substantial load on the FL subsystem, since it may have to simulate, to some extent, the Prolog subsystem in processing the terms returned by early queries to generate the terms it requires for later queries.

Also, it may result in extremely heavy traffic across the interface, if for example an early query in the sequence may result in a very large Prolog structure. (This may happen, for example, if the set of all answers to a query is required. Another example is if the Prolog subsystem is partitioned into separate theories, in which case a query may be made to determine which theory is the appropriate one to use for answering further queries; the answer to the first query would then be the complete theory.) It may be that what the FL subsystem requires is actually some small structure for which the construction of the large structure is a necessary intermediate. In the present system, the large Prolog structure can be left in the Prolog subsystem. The FL subsystem can incorporate it in a later query by referring to it by means of its descriptor.

The descriptor has to be associated with the term in both subsystems, the FL subsystem and the Prolog subsystem.

Considering first the Prolog subsystem, this must therefore hold terms in a manner which enables them to be identified by means of the descriptors. The descriptors therefore provide a pointer function to the terms in the Prolog subsystem.

Depending on the precise nature of the Prolog subsystem, the descriptors may include direct pointers to the associated terms (i.e. the addresses of those terms), or they may include indirect pointers which point to a set of relatively fixed addresses which in turn contain secondary pointers to the terms themselves. The latter case enables the descriptors themselves to be retained in the interface between the two subsystems, with the Prolog subsystem including the set of relatively fixed addresses and a mechanism for maintaining the secondary pointers updated if the terms should be moved around in the subsystem.

A conventional Prolog subsystem will normally contain a terms storage area in which the terms occurring in the course of attempting to satisfy a query are stored. This terms storage area can conveniently be used for the storage of terms associated with descriptors. (Most of those terms will normally be involved in the query processing, and hence in the terms storage area anyway.)

Considering now the FL subsystem, the descriptors can consist simply of the pointers to the Prolog subsystem, with these pointers (address values) being made available directly to the FL subsystem. However, this has the disadvantage that it requires the FL subsystem to be able to faithfully support the address structure of the Prolog subsystem, and this in turn means that the FL subsystem must be designed so that it can do this whatever the precise form of the Prolog subsystem might be.

This problem could be overcome by converting the pointers in the same way as Prolog terms which are being passed from the Prolog subsystem to the FL subsystem. That would convert them into a form compatible with the FL subsystem. They would of course need to be converted back into the Prolog subsystem form when they were being used to identify terms in the Prolog subsystem. This however involves a substantial processing burden.

The descriptor therefore preferably includes an identifier which can be used directly by the FL subsystem and which is associated with the pointer which is used by the Prolog subsystem.

The maintenance of the descriptors is a function of the interface, which establishes and maintains the correspondence between the identifier and the pointer of each descriptor. It achieves this by means of a table of identifier/pointer pairs.

It is convenient to use integers for the identifiers (which can also be called descriptor values). Each variable must obviously be assigned a unique identifier. This can be done by maintaining a list of identifiers in use and choosing the smallest value not in the list. However, there are complications in determining when an identifier is finally dead, so it is preferred to choose identifiers in strictly ascending order, to avoid any possibility of confusion. The identifier size can easily be chosen so that the system is not likely to run out of identifier values until it has greatly exceeded its expected life.

A descriptor table to be large enough to hold all possible identifiers and their associated pointers would of course have to be extremely large. In practice, therefore, the descriptor table is large enough to hold only a limited number of descriptors, and the FL subsystem can delete descriptors as they become obsolete, so freeing their storage locations for use for new descriptors.

During the processing of queries, the Prolog terms involved will appear in the terms storage area. As successive and different queries are processed, so the terms involved in processing previous queries may disappear from the terms storage area. The pointers to these terms will therefore become invalid. The deletion of descriptors from the descriptor table by the FL subsystem can be used to prevent that subsystem from using such invalid pointers. If the FL subsystem should attempt to use an identifier of a deleted descriptor, the interface will find that that identifier is no longer present in the descriptor table, and return an error signal. (If the FL subsystem used the pointers directly, it would be much more difficult to prevent the use of invalid pointers.)

Referring to Fig. 1, the descriptors are stored in a descriptor list register 32, each location of which is divided into two parts, a pointer part 32A and an identifier part 32B. The identifier counter 33 is used to generate identifiers, being incremented by 1 each time a new identifier is required. Each identifier is known to the FL subsystem program; each pointer points to the corresponding Prolog term which is stored in the Prolog terms register 23 in the Prolog subsystem.

The present system therefore enables the FL subsystem to access the Prolog subsystem while keeping the efficiency of the interface subsystem high. Although the Prolog processing is controlled by the FL subsystem, the manipulation of the Prolog system by the FL subsystem is indirect, with the actual Prolog processing being in effect confined to the Prolog system. Any potentially large Prolog structures which are generated in the course of that processing therefore remain confined to the Prolog subsystem.

## Detailed description of query processing

It was stated above that the main object of the system is to enable the FL subsystem to put a query, such as **f(abc, X)**, to the Prolog subsystem, with the Prolog subsystem answering the query and returning the answer to the FL subsystem for that subsystem to utilize.

The FL subsystem has to provide a representation of this query in FL format or language. The interface subsystem has to interface between the FL subsystem and the Prolog subsystem in both directions; in the Prolog-FL direction, it has to return the values of the variables which were unbound in the original query and have become instantiated (bound) as a result of the query being satisfied by the Prolog subsystem.

The interface subsystem operates in two stages. In the first stage, it transfers the query from the FL subsystem to the Prolog subsystem. In the second stage, it returns the results of the query from the Prolog subsystem to the FL subsystem. The interface subsystem also performs the appropriate code conversions during the course of the transfer, as discussed above.

The Prolog subsystem then attempts to satisfy the query. Assuming that this attempt is successful, the Prolog system then has values available for the remaining variables in the Prolog query to be bound to.

In the second stage, the interface subsystem receives the instantiated Prolog variables which satisfy the query. For each such variable, it generates a descriptor, putting a new entry in the table to associate the new identifier with a pointer to the Prolog term in the Prolog subsystem. It also makes the identifier available to the FL subsystem, by returning the identifier to the FL subsystem.

We will explain the nature of the system by describing how it operates, starting with a very simple form of query and progressing to more complicated query forms.

Consider the above query **f(abc, X)**. This has to be expressed by the FL subsystem in the syntax which it uses. For convenience, we will suppose that the FL subsystem uses the C language, though it is not necessary to understand this language for present purposes. A function Query is defined in the FL subsystem for use as the Prolog query function. This query function, which we will call an FL query, consists of the query term Query followed by a pair of parentheses containing the Prolog query in quoted form; that is, enclosed in quotation marks. Thus the above query can be expressed as Query**("f(abc, X)")**.

The query in quoted form is passed to the interface, which removes the quotation marks, carries out any necessary format conversion on the individual terms, and passes it as the Prolog query **f(abc, X)** to the Prolog subsystem. The Prolog subsystem processes the query, and returns a signal indicating whether or not it has managed to satisfy the query.

Referring to Fig. 1, the FL query is stored in the query register 12 in the FL subsystem. The interface includes a query register 34 into which the query is transferred with a variety of transformations to convert it into Prolog form. The query is then passed to the query interface 21 of the Prolog subsystem for processing by the Prolog subsystem.

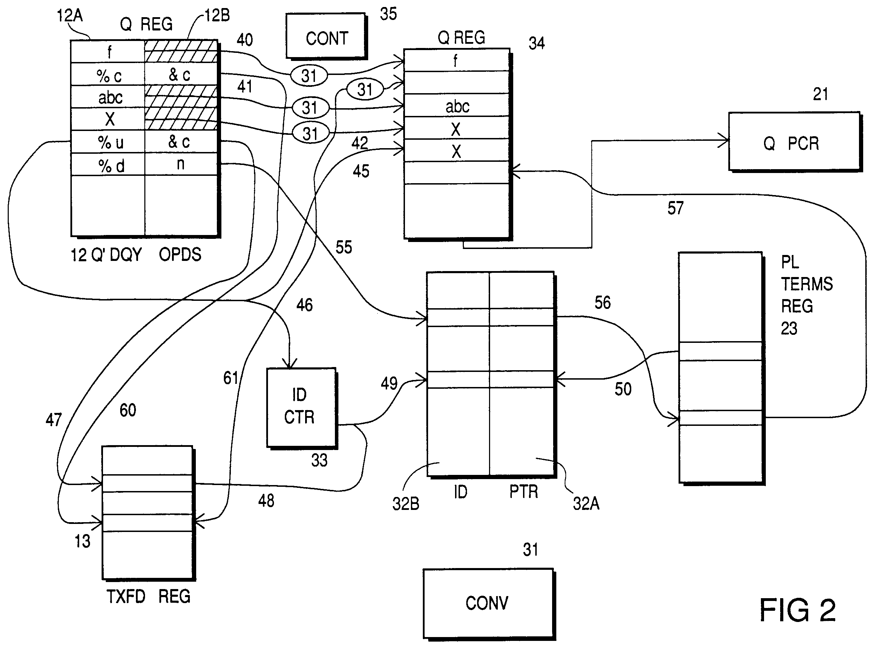

Fig. 2 is a more detailed diagram of parts of the system, showing information flows occurring in the transfer of a query through the interface. The query register 12 of the FL subsystem is divided into two parts, a quoted query register 12A and a query function operands register 12B. These respectively contain the quoted query and the operands of the query function from the FL program 11A. Each of the two parts 12A and 12B is divided into sections, such that each section of part 12A contains a term in the quoted query and the corresponding section of part 12B contains the corresponding operand (if any). It will be realized that register 12 is shown as containing a conflation of various different possible forms of FL query. Empty positions in register half 12B are indicated by shading.

Referring to Fig. 2, for the query under discussion only half 12A of the query register 12 is used, with the functor and terms of the quoted query being stored in successive sections. When the FL query is executed, it is inserted into the FL query register 12, with the functor **f** and the terms **abc** and **X** being entered into appropriate positions in register half 12A.

The interface copies the terms into the corresponding sections of its query register 34, as shown by information flow paths 40 to 42. The appropriate format conversions are performed by the format converter 31 during this copying; to keep the flow paths short, this is indicated by the small blocks 31 included in the flow paths.

It will be realized that this operation, dealing with the FL query Query**("f(abc, X)")**, is broadly equivalent to the operation of the prior art system.

However, the present system differs in two respects from the prior art in dealing with this query. First, the Prolog subsystem returns a second signal to the FL subsystem, indicating whether or not the query is resatisfiable - that is, whether there are any more solutions to the query. Second, although the Prolog subsystem has instantiated the unbound variable X to some specific value, that value is not made available to the FL subsystem.

Suppose now that the FL subsystem needs to be able to use the value of **X** which has been found, e.g. in a further query. To do this, the variable **X** is replaced, in the FL query, by a place indicator, a type indicator, and an identifier. In the preferred syntax, the place indicator is the symbol **%** (percent) and the type indicator is the symbol **u** (unbound). The identifier will be an integer which is to be placed in the FL system at an address c; this is included in the FL query with a preceding symbol **&** (ampersand, indicating the address of a variable rather than a variable itself). Further, the place and type indicators are placed together in the quoted query, and the identifier address is placed as an operand in the FL query following the quoted query. Thus the FL query becomes Query**("f(abc, %u)", &c)**.

When this FL query is passed to the interface, the interface extracts the quoted query and performs any necessary conversion on the functor **f**. It also detects the symbol combination **%u** for an unbound variable place marker, and replaces this by a Prolog variable. The Prolog subsystem, in conjunction with this, processes the query, instantiates the variable, and provides a pointer to its location in the terms store, as discussed above. The interface places the pointer in a spare descriptor location, selects the next identifier value (as discussed above), puts that in the descriptor location together with the pointer, and passes the identifier back to the address in the FL subsystem identified by the address pointer in the FL query.

The FL subsystem can then use the identifier in subsequent queries.

The Prolog subsystem actually makes the pointer to the variable available to the interface for FL queries of the form Query**("f(abc,X)")** as well as those of the form Query**("f(abc, %u)", &c)**. More generally, it makes available pointers to all variables in the FL query, but the interface only utilizes the pointers corresponding to variables indicated by place. markers. Thus for a FL query Query**("f(abc, %u, Y, %u), &cl, &c2)**, the interface will replace the two place markers by suitable Prolog variables (say **X** and **Z**), the Prolog subsystem will instantiate all three variables and make pointers to them available, and the interface will construct descriptors for **X** and **Z** and write the identifiers from those descriptors in the FL subsystem at the addresses c1 and c2.

Referring to Fig. 2, the **%u** in the quoted query is inserted into register half 12A, and the operand **&c** is inserted into the corresponding section in the other half 12B. (The operands following the quoted query appear in the same order as the place markers in the quoted query, so the operands can readily be matched with their place markers.) The interface copies the **%u** into register 34 as a Prolog variable (flow path 45), and also uses the **%u** to select an identifier value from the identifier counter 33 (flow path 46). (The counter then automatically increments by 1, as discussed above.) The **&c** in the query register half 12B selects a storage location in the FL subsystem (shown here as being in the transferand register area 13) (flow path 47), and the identifier is written into that location (flow path 48).

A free location is found (by the interface control unit 35) in the descriptor table 32, which is divided into two halves 32A and 32B for identifiers and pointers respectively. The identifier is written into that free location (flow path 49). The query in register 34, in Prolog form, is passed to the query processor 21 of the Prolog subsystem. That subsystem then processes the query, putting terms which occur during its satisfaction into the terms storage register or area 23. When the query has been satisfied, the instantiation of the unbound variable **X** will be in that area. Its address is copied (flow path 50) into the pointer section of the descriptor register 32 associated with the identifier which has already been written into that descriptor register.

The interface thus converts the query to Prolog form, passes it to the Prolog subsystem, constructs a descriptor for the variable in the query, and passes the identifier of the descriptor to the FL subsystem for future use by the FL subsystem.

The FL subsystem can thus be given the identifiers of terms in the Prolog system.

For the FL subsystem to use such terms in subsequent FL queries, it uses an FL query form in which the term is represented, as before, by a place indicator, a type indicator, and an identifier. In the preferred syntax, the place indicator is the symbol **%** (percent) and the type indicator is the symbol **d** (descriptor); the identifier is an integer (which we can represent by **n**). Further, the place and type indicators are placed together in the quoted query, and the identifier is placed as an operand in the FL query following the quoted query. Thus the FL query becomes, say, Query**("f(%d, X)", n)**.

When this FL query is passed to the interface, the interface extracts the quoted query and performs any necessary conversion on the functor **f**. It also detects the symbol combination **%d** for a term in the Prolog subsystem. It extracts the identifier n from the FL query, looks up the corresponding pointer in the descriptor table, uses this to extract the term itself from the terms storage area of the Prolog subsystem, and inserts the term in the query. The Prolog subsystem, in conjunction with this, processes the query.

Referring to Fig. 2, when the interface finds a place marker **%d** in the FL subsystem query register half 12A, it takes the associated identifier from the corresponding position in register half 12B and uses this to find the corresponding descriptor in register 32 (flow path 55). Having found the descriptor, it takes the pointer and uses this to find the corresponding variable in the terms register area 23 (flow path 56), and copies that term into its query register 34 (flow path 57).

In fact, the Prolog subsystem may be arranged to use the pointer directly, rather than the term being copied from one place (the terms storage area) to another (the query interface) in that subsystem.

The FL subsystem may, of course, itself need to use a term in the Prolog subsystem, rather than merely using the term for further queries to the Prolog subsystem. This is achieved by means of a function Materialise, which has the syntax Materialise(**n**), where **n** is an identifier. When this function occurs, the identifier value is passed to the interface, which looks up the corresponding pointer in the descriptor table, uses this to locate the associated Prolog term in the terms storage area in the Prolog subsystem, and copies this term across to a transferand storage area in the FL subsystem.

If the term is a simple one, the interface performs any necessary format conversion. If, however, the term is a complicated one, then the required format conversion may be a complicated affair. For example, analysis of the structure of the term may be required to distinguish different fields, and different types of field (numeric, character strings, %c) may require different format conversions. In such cases, it may be more convenient for the format conversion to be performed by suitable subroutines in the FL subsystem.

So far, we have discussed how terms generated in the Prolog subsystem may be used in later queries and brought back to the FL subsystem, using descriptors. We have also seen how terms can be transferred direct from the FL subsystem to the Prolog subsystem. However, terms which are directly transferred do not acquire descriptors. It is clearly desirable to be able to assign descriptors to terms originating in the FL subsystem.

It would be possible to do this by defining a suitable Prolog function, say **equal(p,q),** which made **p** and **q** equal, and passing the term across using this function with one term in it a variable (identified by the symbols **%u**) which becomes bound to the value of the other. The present system, however, has a more direct method of achieving this.

This method uses a function Dematerialise, which has the syntax d = Dematerialise(term). This function operates on a term which is in the FL subsystem transferand storage area at address **term**. It passes the term to the interface, which selects the next identifier number, performs any necessary format conversion on the term and and passes it on to the terms storage area in the Prolog subsystem, obtains the pointer to the term (the address of the term in the terms storage area), combines the identifier and pointer to form the descriptor and stores it in the descriptor register, and returns the identifier to the FL subsystem for its future use.

This method involves passing the term to the Prolog subsystem in advance of its use in queries.

The system can also pass a term from the transferand area to the Prolog subsystem simultaneously with its use in a query. This uses the FL function Query, with the variable being indicated by a place indicator (%), a type indicator c, and the address (say term) of the variable in the transferand storage area in the FL subsystem. In the preferred syntax, the place and type indicators are placed together in the quoted query, and the identifier is placed as an operand in the FL query following the quoted query, as before. Thus the FL query becomes, say, Query**("f(%c, X)", &c)**, where the **&c** is the address of the term in the transferand storage area 13.

When an FL query containing a **%c** term is executed, the interface extracts the term from the transferand storage area, using the address **&c**, performs any necessary format conversion, and inserts the term in the query register 34. It does not construct a descriptor for the term.

Referring to Fig. 2, when a query including a **&c** place holder is executed, the interface uses the address **&c** to locate the term in the transferand storage area 13 (flow path 60), and copies the term into the appropriate section of the query register 34 (flow path 61). (As before, the interface can in fact copy the term into the Prolog subsystem terms storage area 23 and cause it to be effectively inserted into the query as the query enters the query processor 21.)

The FL query can contain all forms of terms, e.g. Query**("f(abc, %d, Y, %u, %c)"**, p, &q, &r). The interface will pass terms such as **abc** across directly, insert terms represented by **%d** into the query using the descriptor table, pass terms represented by **%c** across from the FL subsystem transferand storage area, and generate descriptors for **%u** terms.

A coupling is therefore established between the FL and Prolog subsystems by means of the descriptor table in the interface subsystem. A term is identified by means of an identifier in the FL subsystem and the associated pointer in the Prolog subsystem. Only single short quantities, the identifiers (which are integer numbers) and pointers (which are essentially memory addresses) are involved in the interface. The size of the interface is therefore modest, and its efficiency is high.

As noted above, the interface subsystem establishes and maintains the correspondence between the identifier and the pointer of each descriptor. In the broader terms of its function as seen by the two subsystems, it establishes and maintains the correspondence between the identifiers and the Prolog terms in the Prolog subsystem, by means of a table of descriptor/Prolog-term pairs. Each pair consists of an identifier and a pointer to the associated term in the Prolog subsystem. If a Prolog term has already been assigned to a variable in a quoted Prolog query, its identifier already exists, and is used to look up the corresponding Prolog subsystem term via the associated pointer in the table.

The FL query function is passed by the FL subsystem to the interface, which processes it to convert it into the appropriate form for processing by the Prolog subsystem. To do this, the interface takes the quoted Prolog query from the FL query function, and performs the appropriate operations for the various place markers therein.

It will be realized that the present system makes no provision for identifying Prolog functors by means of descriptors. Such identification could be implemented in substantially the same way as for other Prolog terms, using the **%d** mechanism (which is essentially simply text substitution). However, the overhead involved in using descriptors for functors would generally be so great as to make this not worth while. This is basically because functors are generally fairly simple, and can therefore readily be copied across from the FL subsystem to the Prolog subsystem whenever they are required.

**General FL subsystem functions**

Of course, the FL query structure discussed above has to be supplemented by various further functions, for both direct and housekeeping purposes. All these functions are, of course, functions in the FL subsystem. The functions provided by the present system are as follows:

### Query

This is the function discussed in detail above. It passes a query to the Prolog subsystem and receives the results back.

### Resatisfy

This function has been mentioned above. It is used to obtain the next solution to the last query already passed to the Prolog subsystem. (A Prolog query may have a number of solutions, and which can be presented in sequence.) This function destroys the previous solution (satisfaction) of the query, and returns the new solution (with new descriptors).

### Accessible

This tests whether a specified identifier is in the interface table.

### Materialise

This function has been discussed above. The Query function establishes a correspondence between some term in the Prolog subsystem and an identifier available to the FL subsystem, but does not make the Prolog term itself available to the FL subsystem. This function passes a copy of the actual Prolog term across to the FL subsystem, where it appears as a transferand.

### Dematerialise

This function has been discussed above. It is equivalent to the Materialise function but works in the opposite direction. It takes a transferand, converts it into a Prolog term, passes it across to the Prolog subsystem, and creates a descriptor (identifier/pointer pair entry in the interface table) for it.

### Initialise

This function initialises the descriptor table, i.e. clears all entries (identifier/pointer pairs). All identifier values are therefore freed for future use. It also establishes communications with the Prolog subsystem.

### Drop

This deletes specified descriptors (identifiers and their associated pointers) from the interface table.

### Concurrency

If the two subsystems of the system are implemented on a single machine such as a personal computer, then only one of them can be active at any one time. When the FL subsystem queries the Prolog subsystem, the FL subsystem becomes inactive while the Prolog subsystem is processing the query, and only becomes active again when the Prolog subsystem has fully processed the query and its activity ceases. At this point, the result of the query is available to the FL subsystem.

The two subsystems of the system may however be capable of parallel activity, should the system for example comprise two separate personal computers appropriately coupled together, or if the FL subsystem is a personal computer coupled to a large host computer forming the Prolog subsystem (or in which the Prolog subsystem is resident). In this case, when the FL subsystem passes a query to the Prolog subsystem, it (the FL subsystem) can continue its activity while the Prolog subsystem is processing the query. In such cases it is convenient to provide the FL subsystem with two modes of proceeding, which can conveniently be termed Wait and Parallel.

For the Wait mode, a simple request function is provided whereby the FL subsystem can request the results of the query from the interface, and will await the results if they are not already available.

This function can be implicit in the form of the query function by which the FL subsystem initiates the query, in which case the FL subsystem will become inactive as soon as the query has been sent to the interface, and will only resume activity when the query is satisfied. This option would be used if the query is expected to be satisfied quickly, or if the sole task of the FL subsystem involves having the query answered.

The function can alternatively be separate from the query function. This option would be used to allow the FL subsystem to perform some other task while the query is being satisfied by the Prolog subsystem; the other task would normally be chosen to match the time which the Prolog subsystem is expected to take in satisfying the query.

For the Parallel mode, an interface interrogate function is provided whereby the FL subsystem can check the interface to see whether the query has been satisfied. This allows the FL subsystem to continue with a variety of other tasks until the query has been satisfied, and then return to processing of the results of the query.

Suitable functions for these purposes are as follows (where Co indicates that the system is capable of concurrent operation of the FL and Prolog subsystems:

## Ask CoQuery

This is a form of Query, in which, after the query has been sent to the Prolog subsystem, the FL subsystem continues immediately with the following instructions.

## CoQuery Solved

This is an enquiry to the Prolog subsystem (via the interface) to discover whether the previous query has been solved. The answer (yes or no) is returned immediately, and the FL subsystem then continues immediately with the following instructions. (That will usually involve continuing with a background task if the query has not been solved, or processing the results of the query if it has.)

## CoQuery Solution

This asks the interface for the results of the previous query. If the query has not yet been solved, the FL subsystem waits for it to be solved before it proceeds.

## CoResatisfy

This asks the Prolog subsystem to resatisfy the previous query; the FL subsystem continues immediately with the following instructions.

## Claims

1. A computer system comprising a procedural language subsystem (10) and a declarative language subsystem (20) coupled by an interface subsystem (30) through which the procedural language subsystem (10) can pass queries to the declarative language subsystem (20) and receive responses therefrom, the interface including format converter means (31) for passing data (initial operands and final results) between the two subsystems, characterized in that:

the procedural language subsystem (10) generates such queries in a form which contains characterizers in place of the operands,

the declarative language subsystem (20) contains the operands in retrievable form,

and the interface (30) includes

a descriptor list memory (32), means (33, 35) for maintaining therein a list of descriptors each of which asasociates an operand characterizer in the procedural language subsystem (10) with an operand in the declarative language subsystem (20), and

means (34, 35) for replacing operand characterizers by the corresponding operands in queries passing through the interface (30) from the procedural language subsystem (10) to the declarative language subsystem (20).

2. A computer system according to claim 1, characterized in that each descriptor comprises two distinct portions, an identifier acting as an operand characterizer and a pointer which points to the operand in the declarative language subsystem.

EP 0 511 437 A1

FL S/S 10

CONT 14

12

Q REG

11A

MEM

11

13

TXFD REG

IF S/S 30

CONT 35

34

Q REG

32

33

ID CTR

D^R LIST REG

CONV 31

PL S/S 20

21

Q PCR

22

23

THEORY

P'L TMS REG

FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | 32ND IEEE COMPUTER SOCIETY INTERNATIONAL CONFERENCE COMPCON SPRING 87 February 1987, SAN FRANCISCO, CALIFORNIA, US pages 403 - 407; RANDY L. RIBLER: 'The integration of the Xenologic X-1 artificial intelligence coprocessor with general purpose computers' * page 403, left column, line 41 - right column, line 10 * * page 404, left column, line 1 - page 407, right column, line 35 * | 1 | G06F9/44 |
| A | 1986 PROCEEDINGS OF THE FALL JOINT COMPUTER CONFERENCE November 1986, DALLAS, TEXAS, US pages 229 - 236; KENNETH MAGEL: 'Interfacing Prolog to PASCAL' * page 229, left column, line 1 - line 9 * * page 229, right column, line 3 - line 24 * * page 230, left column, last paragraph - right column, last paragraph * | 1 | |
| A | EP-A-0 415 895 (IBM) 6 March 1991 * abstract * * page 25, line 36 - page 30, line 38 * | 1 | TECHNICAL FIELDS SEARCHED (Int. Cl.5 ) G06F |

The present search report has been drawn up for all claims

| Place of search | Date of completion of the search | Examiner |
|---|---|---|
| THE HAGUE | 08 JANUARY 1992 | WILTINK J.G. |